# EUROPEAN PATENT APPLICATION

(11) **EP 4 566 922 A1**
(43) Date of publication of application: **11.06.2025**
(21) Application number: 23871586.6
(22) Date of filing: 23.08.2023
(51) Int. Cl.: B62D 21/18, B60P 1/04, B60R 19/02, B60R 19/24, B60R 19/48

(54) **DUMP TRUCK**

(30) Priority: 28.09.2022 JP 2022155312
(71) Applicant: Hitachi Construction Machinery Co., Ltd., Tokyo 110-0015 (JP)
(72) Inventor: WATAKA, Yuki, Tsuchiura-shi, Ibaraki 300-0013 (JP)
(74) Representative: Manitz Finsterwald Patent- und Rechtsanwaltspartnerschaft mbB
(86) International application number: PCT/JP2023/030276
(87) International publication number: WO 2024/070345

(57) **Abstract**

The vehicle frame (16) comprises a left frame (18), a right frame (19), a front frame (20) connecting the front end of the left frame (18) and the front end of the right frame (19), and a front bumper (28) fixed to the front side of the front frame (20), provided with a hook (28D) for lifting and mounted with device (radiator (11), radiator (42), pantograph support (55)). The front bumper (28) is mounted with a base fixing section (29) to which multiple types of device mounting bases ((30), (44), (56)) corresponding to the types of device (radiator (11), radiator (42), pantograph support (55)) are selectively fixed.

## Description

### TECHNICAL FIELD

This disclosure, for example, relates to dump trucks that are suitably used for transporting crushed stone and the like mined in mines.

### BACKGROUND ART

A dump truck for transporting crushed stone and the like mined in mines is configured to include a vehicle body frame to which wheels are attached, a vessel swingably provided relative to the vehicle body frame, an engine mounted on the vehicle body frame positioned at the front side of the vessel, and a cab mounted on the vehicle body frame above the engine (Patent Document 1) . Additionally, a radiator is mounted on the front end side of the vehicle body frame, and this radiator cools the engine (engine coolant) .

Dump trucks are equipped with a wide range of options to accommodate the environment in which they are used and the needs of customers. For example, in high-altitude areas, dump trucks equipped with special radiators with higher cooling performance are used instead of those with standard radiators. In large mining sites, trolley-type dump trucks driven by electric motors powered through trolley wires (overhead wires) are used. This trolley-type dump truck is equipped with a pantograph (current collector) to collect power from the trolley wires.

### PRIOR ART DOCUMENT

### PATENT DOCUMENT

Patent Document 1: Japanese Patent Laid-Open No. 2012-218605 A

### SUMMARY OF THE INVENTION

The vehicle body frame of a dump truck is typically configured to include a main frame on which a vessel, engine, and cab are provided, and a front bumper provided on the front end side of the main frame. The standard radiator, special radiator, and pantograph are mounted on the front bumper. Therefore, when mounting different types of device such as a standard radiator, special radiator, or pantograph, a method of attaching a front bumper corresponding to each type of device to the front end side of the main frame using fasteners or the like can be considered.

However, the front bumper is usually equipped with a hook for lifting the vehicle body, and the dump truck is lifted using a crane or the like with a rope hooked onto this hook. When lifting the dump truck, a large load acts on the joint between the front bumper with the hook and the main frame. Therefore, if a front bumper corresponding to the type of device is replaceably attached to the main frame, it becomes difficult to ensure sufficient strength at the joint between the front bumper and the main frame.

On the other hand, if a front bumper corresponding to the device is fixed non-replaceably to the front end side of the main frame, or if the front bumper is fixed in a complex manner for each model, a dedicated vehicle body frame corresponding to the specifications of the dump truck is required. As a result, it is difficult to standardize the vehicle body frame, making it challenging to easily change the specifications of the dump truck.

The objective of the present invention is to provide a dump truck that allows for the standardization of the vehicle body frame regardless of the type of device mounted.

The dump truck of the present invention includes a vehicle body frame to which wheels are attached and a vessel tiltably provided relative to the vehicle body frame for loading transported materials. The vehicle body frame comprises a left frame disposed on the left side in the lateral direction and extending in the longitudinal direction, a right frame disposed on the right side in the lateral direction and extending in the longitudinal direction, a front frame connecting the front ends of the left and right frames and extending in the lateral direction, and a front bumper fixed to the front side of the front frame, which is equipped with a hook for lifting and on which equipment is mounted. The front bumper of the dump truck is provided with a base fixing section to which multiple types of equipment mounting bases corresponding to the type of equipment can be selectively fixed.

According to the present invention, multiple types of device mounting bases corresponding to the type of device mounted on the front bumper can be selectively fixed to the base fixing section of the front bumper. This allows for the attachment of multiple types of different device to the front bumper using the device mounting bases.

### BRIEF DESCRIPTION OF THE DRAWINGS

Fig. 1 is a left side view showing a standard specification dump truck according to the first embodiment.
Fig. 2 is a front view of the standard specification dump truck.
Fig. 3 is a perspective view showing the vehicle body frame alone.
Fig. 4 is an exploded perspective view showing the state of attaching a standard specification radiator to the front bumper.
Fig. 5 is a left side view showing a special specification dump truck according to the second embodiment.
Fig. 6 is a front view of the special specification dump truck.
Fig. 7 is an exploded perspective view showing the state of attaching a special specification radiator to the front bumper.
Fig. 8 is a left side view showing a trolley specification dump truck according to the third embodiment.
Fig. 9 is a front view of the trolley specification dump truck.
Fig. 10 is an exploded perspective view showing the state of attaching a pantograph support to the front bumper.

### MODE FOR CARRYING OUT THE INVENTION

Hereinafter, embodiments of the dump truck according to the present invention will be described in detail with reference to the accompanying drawings. In the embodiments, the traveling direction of the dump truck is described as the longitudinal direction, and the direction perpendicular to the traveling direction is described as the lateral direction.

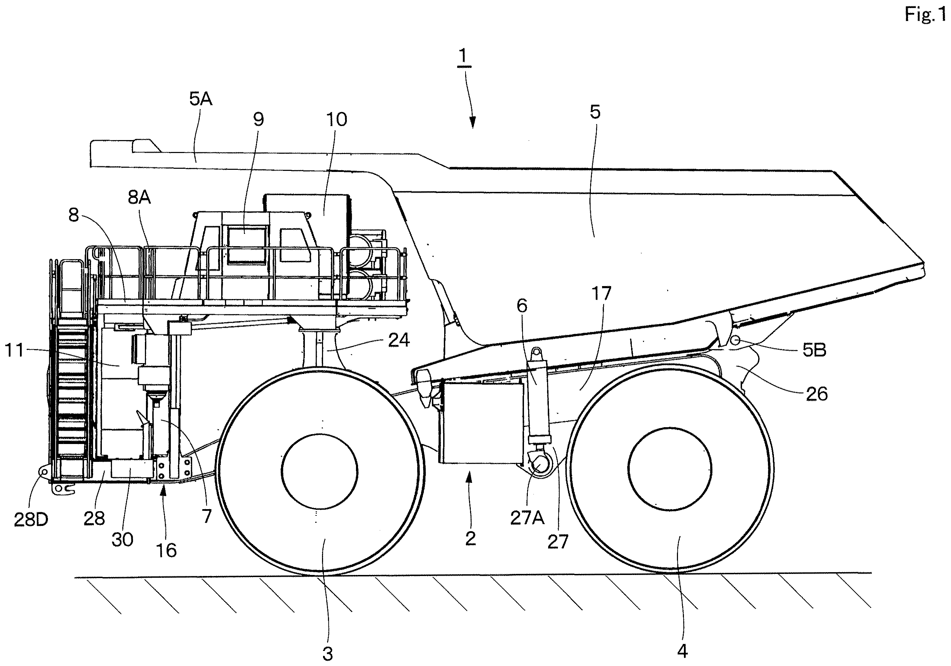

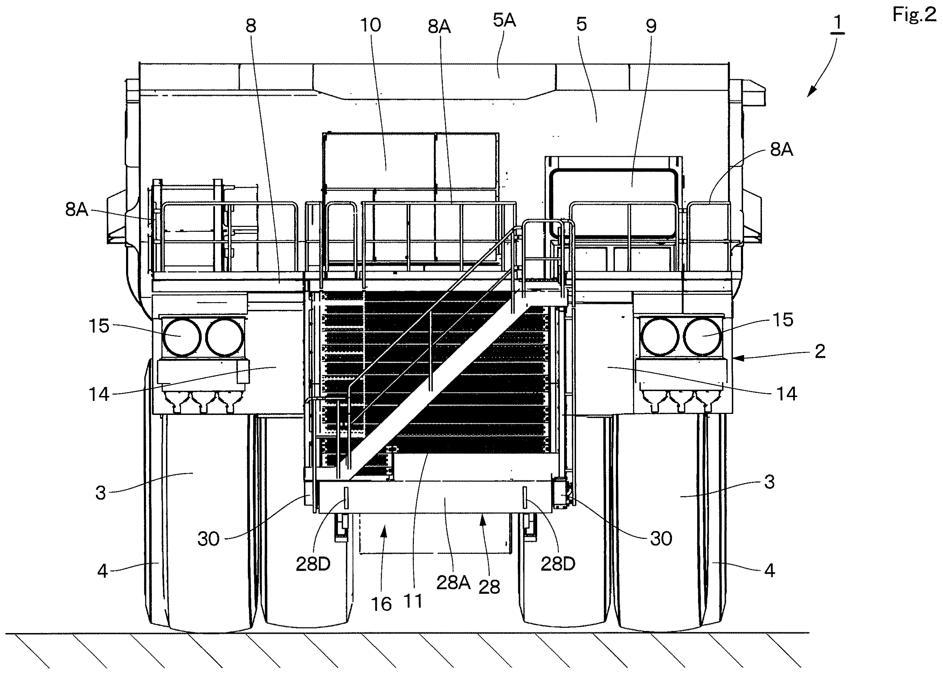

Figs. 1 to 4 show a standard specification dump truck 1 according to the first embodiment of the present invention. The standard specification dump truck 1 is equipped with a standard specification radiator 11, which will be described later.

In the figure, the dump truck 1 is configured to include a self-propelled vehicle body 2 equipped with left and right front wheels 3 and left and right rear wheels 4, and a vessel 5, which will be described later, tiltably mounted on the vehicle body 2. The dump truck 1 transports materials such as crushed stone mined in mines by loading them onto the vessel 5. The vehicle body 2 of the dump truck 1 is configured to include a building 7, deck 8, cab 9, vehicle body frame 16, and the like, which will be described later.

The left and right front wheels 3 are rotatably provided on the front side of the vehicle body 2, forming the steering wheels. The front wheels 3 are supported by the vehicle body frame 16 via a front wheel suspension (not shown), and vibrations transmitted from the front wheels 3 to the vehicle body 2 are mitigated. The left and right rear wheels 4 are rotatably provided on the rear side of the vehicle body 2 and are driven to rotate by a travel device (not shown) equipped with an electric motor. The travel device of the rear wheels 4 is supported by the vehicle body frame 16 via a rear wheel suspension (not shown), and vibrations transmitted from the rear wheels 4 to the vehicle body 2 are mitigated.

The vessel 5 is tiltably (undulatively) mounted on the vehicle body frame 16. The vessel 5 is formed as a large bottomed container for loading a large amount of minerals and the like excavated by, for example, a hydraulic shovel (not shown). The rear bottom of the vessel 5 is tiltably connected via a connecting pin 5B to left and right rear end brackets 26 provided on the vehicle body frame 16, which will be described later. On the front side of the vessel 5, an eave portion 5A extending horizontally forward from the upper part is integrally provided. The eave portion 5A of the vessel 5 extends to the front end side of the deck 8 while covering the cab 9, which will be described later, from above.

The hoist cylinder 6 is provided in pairs in the lateral direction between the vehicle body frame 16 and the vessel 5 (only the left side is shown) . The hoist cylinder 6 is composed of, for example, a hydraulic cylinder and tilts the front side of the vessel 5 up and down relative to the vehicle body frame 16. One end side (lower end side) of the hoist cylinder 6 is pivotally attached to a cylinder support shaft 27A, which will be described later, and the other end side (upper end side) of the hoist cylinder 6 is pivotally attached to the lower surface side of the vessel 5. Therefore, by extending or retracting the hoist cylinder 6, the front side (eave portion 5A side) of the vessel 5 pivots (moves up and down) in the vertical direction with the connecting pin 5B as a fulcrum. As a result, the vessel 5 tilts to a dumping position where the front side is lifted upward, allowing the discharge of transported materials loaded on the vessel 5.

The building 7 is provided on the front side of the vehicle body 2. The building 7 is formed in a rectangular frame shape enclosed by left and right side plates and a top plate, and inside the building 7, mounted equipment such as an engine, generator, and hydraulic pump (all not shown) are housed. Additionally, the building 7, together with the left support column 24 and right support column 25 of the vehicle body frame 16, which will be described later, also functions to support the deck 8 and the like from below.

The deck 8 is positioned in front of the vessel 5 and is provided above the left support column 24, right support column 25, and building 7 of the vehicle body frame 16. The deck 8 is formed in an elongated rectangular flat plate shape in the lateral direction and is supported from below by an upper crossbeam (not shown) attached between the upper ends of the left support column 24 and right support column 25 of the vehicle body frame 16 and the building 7. The deck 8 is positioned above the left and right front wheels 3 and extends in the horizontal direction, and the cab 9, control cabinet 10, and the like are mounted on the deck 8. Additionally, the upper surface of the deck 8 serves as a flat passage surface for operators and the like to pass through, and the outer periphery of the deck 8 is surrounded by multiple handrails 8A.

The cab 9 is provided on the deck 8 in a state covered from above by the eave portion 5A of the vessel 5. The cab 9 forms the driver's cabin where the operator of the dump truck 1 boards and alights, and inside the cab 9, a driver's seat, accelerator pedal, brake pedal, steering handle, and multiple control levers (all not shown) are provided.

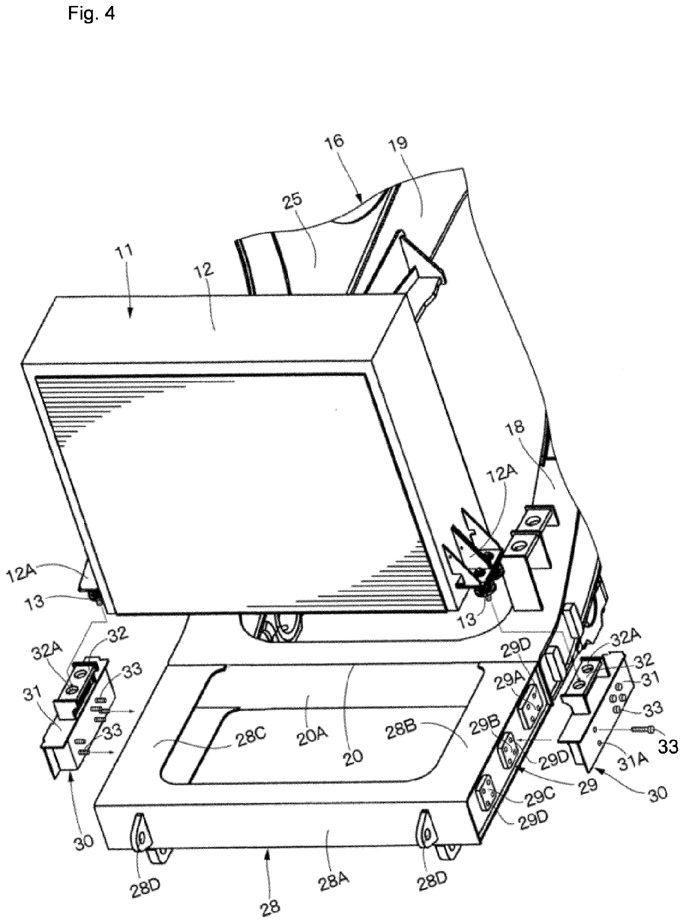

The standard specification radiator 11 is an example of the device mounted on the front bumper 28, which will be described later. As shown in FIG. 4, the radiator 11 includes a rectangular frame-shaped radiator frame 12 and a heat exchanger body (not shown) disposed inside the radiator frame 12. The radiator 11 cools the engine coolant, etc., of an engine (not shown) housed within the building 7. Mounting legs 12A are provided at the lower ends of both the left and right sides of the radiator frame 12. Multiple (e.g., two) mounting members 13 are provided adjacent to each other in the front-rear direction on these left and right mounting legs 12A, and these mounting members 13 are attached to the device mounting base 30, which will be described later.

Fenders 14 are provided on both the left and right sides of the radiator 11, projecting laterally from the side panels of the building 7. Air cleaners 15 are mounted on each of these left and right fenders 14. The air cleaner 15 captures dust contained in the outside air at work sites such as mines and supplies clean air (intake air) to the engine.

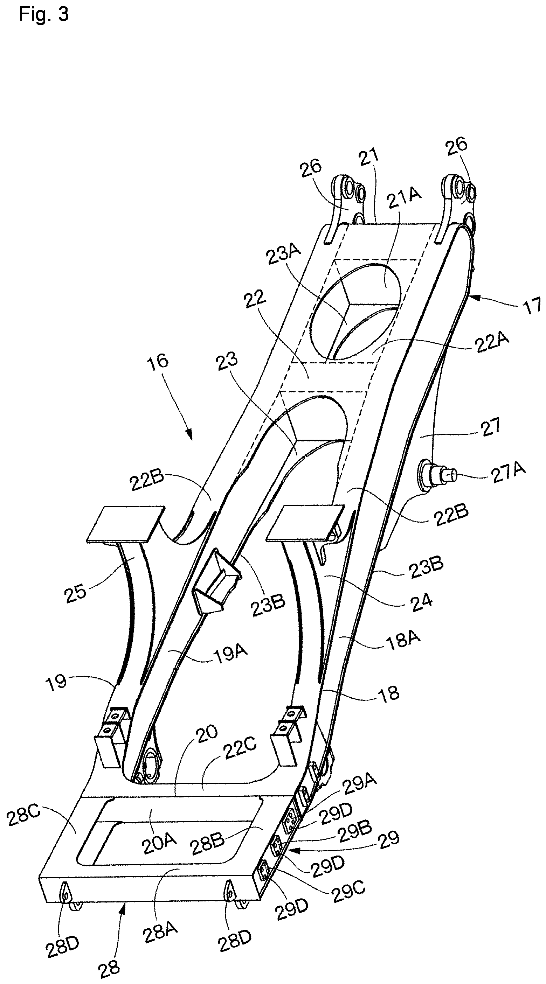

Next, the vehicle body frame 16 according to the present invention will be described with reference to FIGS. 3 and 4. The vehicle body frame 16 is configured as a common part that can be used not only for the standard specification dump truck 1 illustrated in this embodiment but also for the special specification dump truck 41 illustrated in the second embodiment described later and the trolley specification dump truck 51 illustrated in the third embodiment.

The vehicle body frame 16 serves as the base of the vehicle body 2 and constitutes a robust support structure. In this embodiment, the vehicle body frame 16 is configured to include a main frame 17 extending in the front-rear direction and a front bumper 28 integrally fixed to the front side of the main frame 17. The main structure of the vehicle body frame 16, the main frame 17, is composed of a left frame 18, a right frame 19, a front frame 20, a rear frame 21, an upper plate 22, a lower plate 23, a left column 24, a right column 25, and the like.

The left frame 18 is positioned on the left side of the vehicle body frame 16 and extends in the front-rear direction. The left frame 18 is configured to include left and right side plates 18A facing each other in the lateral direction, an upper plate 22 closing the upper ends of the left and right side plates 18A, and a lower plate 23 connecting the lower ends of the left and right side plates 18A. The right frame 19 is positioned on the right side of the vehicle body frame 16 and extends in the front-rear direction. The right frame 19 is configured to include left and right side plates 19A facing each other in the lateral direction, an upper plate 22 closing the upper ends of the left and right side plates 19A, and a lower plate 23 connecting the lower ends of the left and right side plates 19A.

The front frame 20 connects the front end of the left frame 18 and the front end of the right frame 19. The front frame 20 is configured to include a front plate 20A and a rear plate (not shown) facing each other in the front-rear direction, an upper plate 22 closing the upper ends of the front plate 20A and the rear plate, and a lower plate 23 closing the lower ends of the front plate 20A and the rear plate. The left end of the front frame 20 is joined to the front end of the left frame 18 by welding, and the right end of the front frame 20 is joined to the front end of the right frame 19 by welding.

The rear frame 21 connects the rear end of the left frame 18 and the rear end of the right frame 19. The rear frame 21 is configured to include a front plate 21A and a rear plate (not shown) facing each other in the front-rear direction, an upper plate 22 closing the upper ends of the front plate 21A and the rear plate, and a lower plate 23 closing the lower ends of the front plate 21A and the rear plate. The left end of the rear frame 21 is joined to the rear end of the left frame 18 by welding, and the right end of the rear frame 21 is joined to the rear end of the right frame 19 by welding.

The upper plate 22 closes the upper ends of the left frame 18, right frame 19, front frame 20, and rear frame 21, and connects the left frame 18 and the right frame 19. The rear side of the upper plate 22 forms a rear connection section 22A connecting the left frame 18 and the right frame 19. The front side of the rear connection section 22A forms a bifurcated section 22B closing the upper ends of the left frame 18 and the right frame 19. The front end of the bifurcated section 22B is connected by a front connection section 22C, which closes the upper end of the front frame 20.

The lower plate 23 faces the upper plate 22 in the vertical direction, closes the lower ends of the left frame 18, right frame 19, front frame 20, and rear frame 21, and connects the left frame 18 and the right frame 19. The lower plate 23 is configured similarly to the upper plate 22, including a rear connection section 23A, a bifurcated section 23B, and a front connection section (not shown) . The rear connection section 23A connects the left frame 18 and the right frame 19. The bifurcated section 23B closes the lower ends of the left frame 18 and the right frame 19. The front connection section closes the lower end of the front frame 20.

The left column 24 and right column 25 are provided at a position closer to the front from the central part in the front-rear direction of the vehicle body frame 16, facing each other in the lateral direction. These left column 24 and right column 25 are made of a hollow fabricated structure with a mountain shape. The left column 24 protrudes upward from the upper plate 22 constituting the left frame 18, and the right column 25 protrudes upward from the upper plate 22 constituting the right frame 19. At the upper ends of the left column 24 and right column 25, a rectangular tube-shaped upper crossbeam (not shown) extending in the lateral direction is attached, and a deck 8 is mounted on the upper side of this upper crossbeam.

At the rear end of the main frame 17, left and right rear end brackets 26 are provided. The rear end brackets 26 each protrude rearward from the rear end of the upper plate 22 constituting the left frame 18 and right frame 19, facing each other in the lateral direction. These left and right rear end brackets 26 pivotally support the bottom section of the vessel 5 via connecting pins 5B.

On the lower side of the intermediate section in the front-rear direction of the main frame 17, left and right cylinder brackets 27 (only the left side is shown) are provided. These left and right cylinder brackets 27 protrude downward from the lower plate 23 constituting the left frame 18 and right frame 19, facing each other in the lateral direction. At the protruding end side of the cylinder bracket 27, a cylinder support shaft 27A extending in the lateral direction is fixed, and the lower end side of the hoist cylinder 6 is pivotally attached to this cylinder support shaft 27A.

In this embodiment, the front bumper 28 is integrally fixed to the front side of the front frame 20 constituting the main frame 17. The front bumper 28 has a U-shaped cross-section formed by a front frame section 28A, a left frame section 28B, and a right frame section 28C, and is formed as a frame body bent in a U-shape as a whole. The front frame section 28A extends in the lateral direction while facing the front frame 20 in the front-rear direction. The left frame section 28B connects between the left end of the front frame section 28A and the left end of the front frame 20. The right frame section 28C connects between the right end of the front frame section 28A and the right end of the front frame 20. In this embodiment, the front bumper 28 is firmly joined to the front frame 20 using welding means and is integrated with the main frame 17. The left frame section 28B of the front bumper 28 is continuous with the left frame 18 of the main frame 17 in the front-rear direction via the front frame 20. The right frame section 28C of the front bumper 28 is continuous with the right frame 19 of the main frame 17 in the front-rear direction via the front frame 20. As a result, the load acting on the front bumper 28 is smoothly transmitted to the left frame 18 and right frame 19 of the main frame 17. As a result, the concentration of the load due to the weight of the radiator 11 on the front bumper 28 is suppressed, and the load can be appropriately distributed between the front bumper 28 and the main frame 17.

On the outer surface of the front frame section 28A of the front bumper 28, a pair of lifting hooks 28D are fixed, spaced apart in the lateral direction. Lifting wire ropes or the like are hooked onto the hooks 28D. The vehicle body frame 16 is provided with hooks (not shown) in addition to the hooks 28D. The dump truck 1 is lifted using a crane or the like with wire ropes hooked onto multiple hooks including the hooks 28D. Here, when lifting the dump truck 1, a large load acts on the joint between the front bumper 28 provided with the hooks 28D and the main frame 17. In contrast, in this embodiment, the vehicle body frame 16 has the front frame 20 constituting the main frame 17 and the front bumper 28 integrally fixed (joined) using welding means. As a result, sufficient strength is ensured at the joint between the front bumper 28 and the main frame 17 (front frame 20) when performing the operation of lifting the dump truck 1.

The base fixing section 29 is provided on the outer surface of the left frame section 28B and the outer surface of the right frame section 28C constituting the front bumper 28 (only the left frame section 28B side is shown). As shown in FIG. 4, the base fixing section 29 is composed of three plate-shaped screw seats 29A, 29B, and 29C arranged adjacent to each other in the front-rear direction. Each of these three screw seats 29A, 29B, and 29C is formed with multiple (e.g., four) bolt holes (female threaded holes) 29D. The screw seats 29A and 29B constituting the base fixing section 29 are fitted with an device mounting base 30 that is compatible with the standard specification radiator 11 of this embodiment.

Here, the base fixing section 29 can selectively fix multiple types of device mounting bases, including not only the device mounting base 30 for attaching the standard specification radiator 11 according to this embodiment, but also the device mounting base 44 for attaching the special specification radiator 42 according to the second embodiment described later, and the device mounting base 56 for attaching the pantograph support 55 for the trolley specification according to the third embodiment.

The left and right device mounting bases 30 are attached to the base fixing sections 29 provided on the left frame part 28B and the right frame part 28C of the front bumper 28 to mount the standard specification radiator 11 on the front bumper 28. The device mounting base 30 includes a rectangular tube-shaped mounting base 31 extending in the front-rear direction and a support frame 32 provided on the upper surface of the mounting base 31.

The mounting base 31 is detachably attached to the left frame part 28B and the right frame part 28C of the front bumper 28. The mounting base 31 has multiple (e.g., six) bolt insertion holes 31A (only two are shown) that penetrate in the left-right direction. Bolts 33 are inserted into each of these bolt insertion holes 31A. The multiple bolt insertion holes 31A correspond to the four bolt holes 29D of the screw seat 29A and the two bolt holes 29D of the screw seat 29B that constitute the base fixing section 29 of the front bumper 28. The bolts 33 inserted into the bolt insertion holes 31A of the mounting base 31 are screwed into the bolt holes 29D of the screw seats 29A, 29B of the base fixing section 29. As a result, the device mounting base 30 dedicated to the radiator 11 is fixed to the left frame part 28B and the right frame part 28C of the front bumper 28.

The support frame 32 is made of a U-shaped frame and is fixed to the upper surface of the intermediate part in the front-rear direction (length direction) of the mounting base 31 using means such as welding. Multiple (e.g., two) mount attachment holes 32A that penetrate in the vertical direction are formed on the upper surface of the support frame 32. The mount attachment holes 32A correspond to the two mount members 13 provided on the mounting leg part 12A of the radiator frame 12 that constitutes the radiator 11. Therefore, with the device mounting base 30 fixed to the left frame part 28B and the right frame part 28C of the front bumper 28, the mount members 13 of the radiator frame 12 can be attached to the mount attachment holes 32A of the support frame 32. As a result, the standard specification radiator 11 can be attached to the front bumper 28 of the vehicle body frame 16 via the device mounting base 30. In this case, the radiator 11 is mounted on the front bumper 28 in a stable state, straddling the front bumper 28 in the left-right direction and attached via the device mounting base 30.

The dump truck 1 according to the first embodiment has the configuration as described above. When transporting crushed stone from a mine or the like using the dump truck 1, the operator boarding the cab 9 starts the engine, and the engine drives the hydraulic pump, generator, etc. (none of which are shown). The power from the generator is supplied to the electric motor of the travel device, and the rear wheels 4 are driven to rotate, allowing the dump truck 1 to travel to the quarry. Then, crushed stone excavated using a large hydraulic shovel or the like (not shown) is loaded onto the vessel 5 of the dump truck 1, which has stopped at the quarry. The dump truck 1 loaded with crushed stone travels to the collection site, where the hoist cylinder 6 tilts the vessel 5 to discharge the crushed stone at the collection site. During the operation of the dump truck 1, the radiator 11 can cool the engine and other components.

Thus, the dump truck 1 according to the first embodiment can fix the device mounting base 30 to the base fixing section 29 (screw seats 29A, 29B) provided on the front bumper 28 using multiple bolts 33. As a result, the standard specification radiator 11 can be attached to the front bumper 28 of the vehicle body frame 16 via the dedicated device mounting base 30.

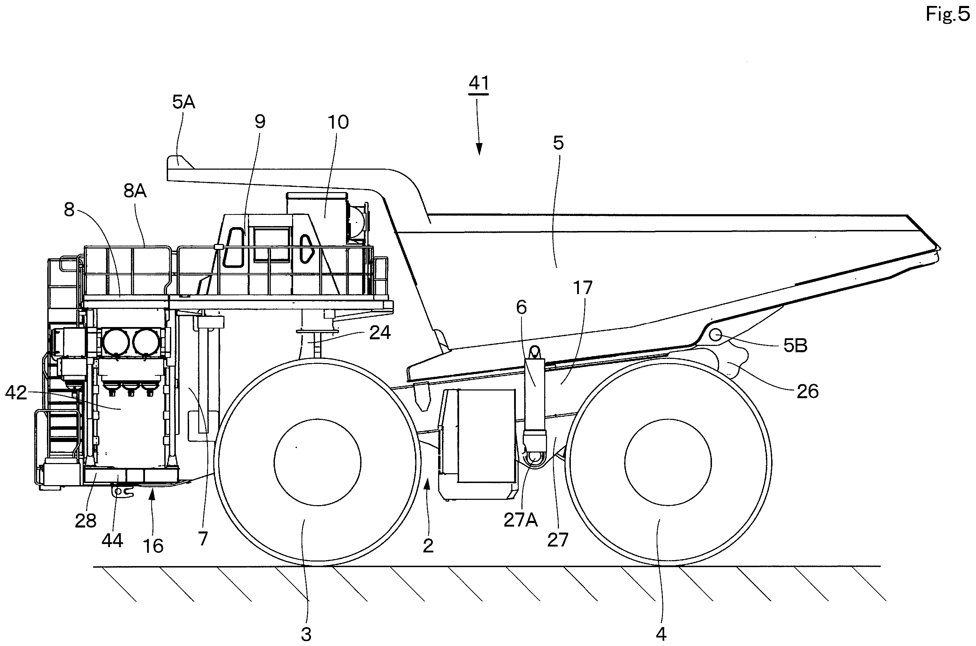

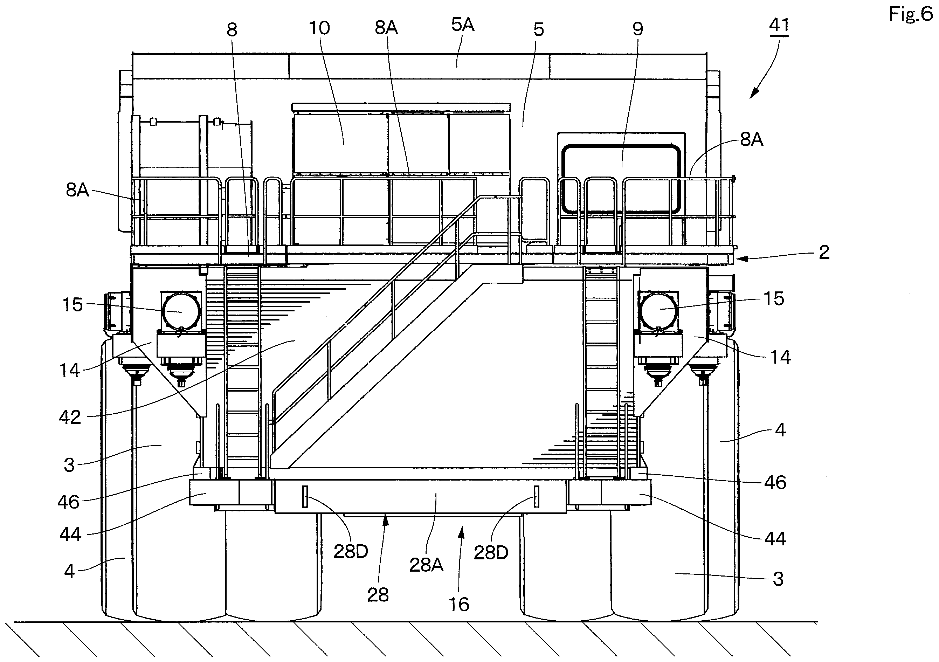

Next, Figures 5 to 7 show the special specification dump truck 41 according to the second embodiment of the present invention. The dump truck 41 has a special specification radiator 42 attached to the front bumper 28 of the vehicle body frame 16 via the device mounting base 44 described later. In the second embodiment, the same reference numerals are used for the same components as in the first embodiment, and their description is omitted.

The special specification radiator 42 is another example of device mounted on the front bumper 28. The dump truck 41, like the standard specification dump truck 1, is configured with a self-propelled vehicle body 2 equipped with left and right front wheels 3 and left and right rear wheels 4, and a vessel 5, described later, that is tiltably mounted on the vehicle body 2. The vehicle body 2 of the dump truck 41 is configured with the vehicle body frame 16, which is a common part with the standard specification dump truck 1, and includes the building 7, deck 8, cab 9, etc., mounted on the vehicle body frame 16. However, the dump truck 41 differs from the dump truck 1 according to the first embodiment in that the special specification radiator 42 is provided on the front bumper 28 that constitutes the vehicle body frame 16.

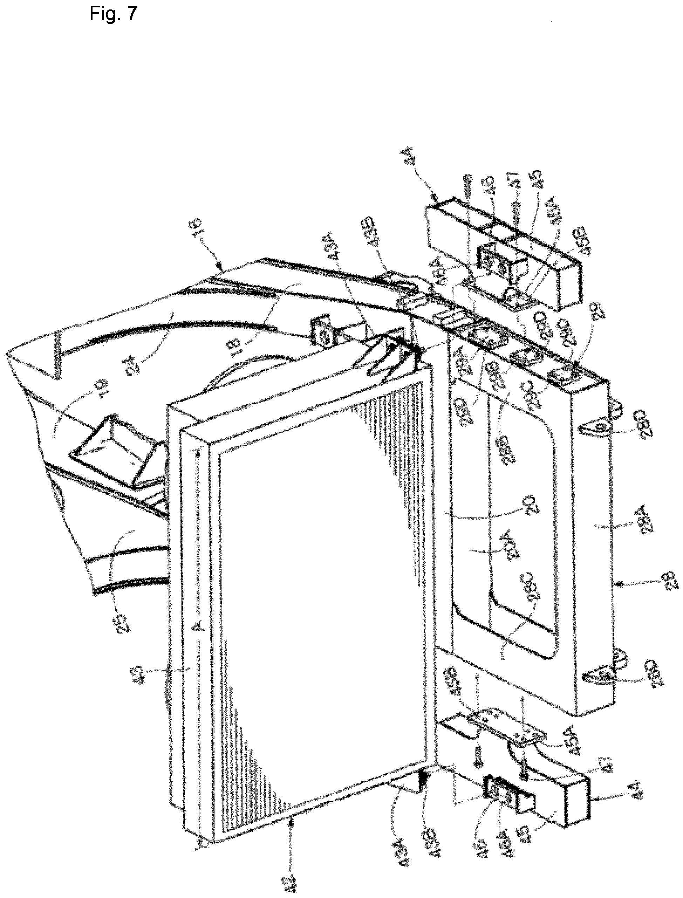

The special specification radiator 42 is attached to the front bumper 28 of the vehicle body frame 16. As shown in Figure 7, the radiator 42 includes a rectangular frame-shaped radiator frame 43 and a heat exchanger body (not shown) disposed inside the radiator frame 43. The radiator 42 is enlarged compared to the standard specification radiator 11 so that the length dimension (width dimension) A in the left-right direction is larger, enhancing the cooling performance for the engine and the like. Mounting leg parts 43A are provided at the lower ends of both the left and right sides of the radiator frame 43. Multiple (e.g., two) mount members 43B are provided adjacent in the front-rear direction on these left and right mounting leg parts 43A, and these mount members 43B are attached to the device mounting base 44.

The left and right device mounting bases 44 are attached to the base fixing sections 29 provided on the left frame part 28B and the right frame part 28C of the front bumper 28 to mount the special specification radiator 42 on the front bumper 28. The device mounting base 44 includes a rectangular tube-shaped mounting base 45 extending in the front-rear direction and a support frame 46 provided on the upper surface of the mounting base 45.

The mounting base 45 is detachably attached to the left frame part 28B and the right frame part 28C of the front bumper 28. A flat plate-shaped flange plate 45A protruding toward the left frame part 28B and the right frame part 28C of the front bumper 28 is provided at the intermediate part in the front-rear direction (length direction) of the mounting base 45. Multiple (e.g., eight) bolt insertion holes 45B that penetrate in the left-right direction are formed in the flange plate 45A. These bolt insertion holes 45B correspond to the four bolt holes 29D of the screw seat 29A and the four bolt holes 29D of the screw seat 29B that constitute the base fixing section 29 of the front bumper 28. The bolts 47 inserted into the bolt insertion holes 45B of the mounting base 45 (flange plate 45A) are screwed into the bolt holes 29D of the screw seats 29A, 29B of the base fixing section 29. As a result, the device mounting base 44 dedicated to the radiator 42 is fixed to the left frame part 28B and the right frame part 28C of the front bumper 28.

The support frame 46 is made of a U-shaped frame and is fixed to the upper surface of the intermediate part in the front-rear direction (length direction) of the mounting base 45 using means such as welding. Multiple (e.g., two) mount attachment holes 46A that penetrate in the vertical direction are formed on the upper surface of the support frame 46. The mount attachment holes 46A correspond to the two mount members 43B provided on the mounting leg part 43A of the radiator frame 43 that constitutes the radiator 42. Therefore, with the device mounting base 44 fixed to the left frame part 28B and the right frame part 28C of the front bumper 28, the mount members 43B of the radiator frame 43 can be attached to the mount attachment holes 46A of the support frame 46. As a result, the special specification radiator 42 is mounted on the front bumper 28 in a stable state, straddling the front bumper 28 in the left-right direction and attached via the device mounting base 44.

The dump truck 41 according to the second embodiment is equipped with the special specification radiator 42 as described above. During the operation of the dump truck 41, the high cooling performance radiator 42 can efficiently cool the engine and other components. Thus, the dump truck 41 according to the second embodiment can fix the device mounting base 44 to the base fixing section 29 (screw seats 29A, 29B) provided on the front bumper 28 using multiple bolts 47. As a result, the special specification radiator 42 can be attached to the front bumper 28 of the vehicle body frame 16, which is a common part, via the dedicated device mounting base 44.

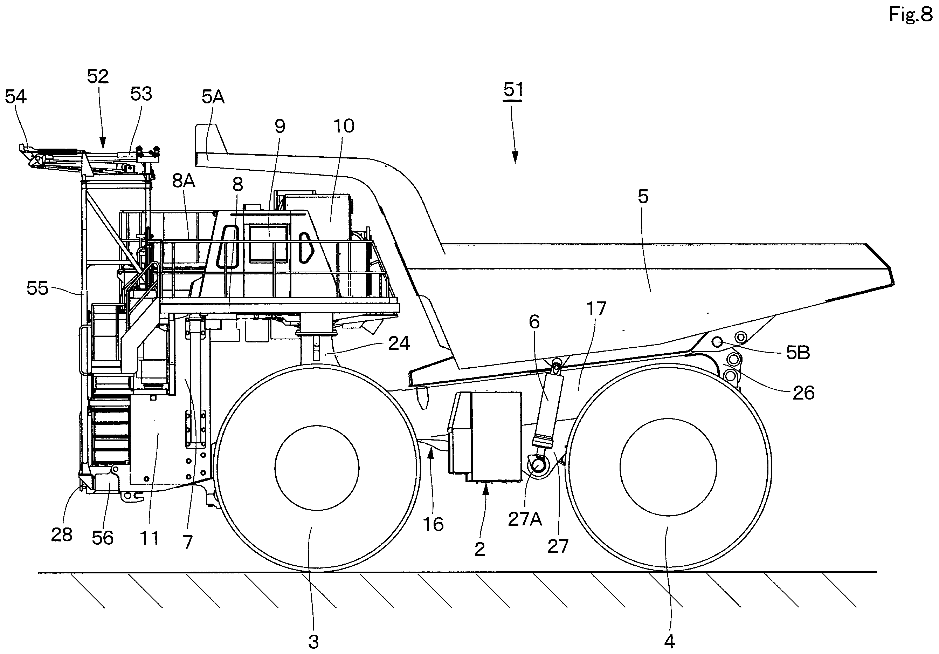

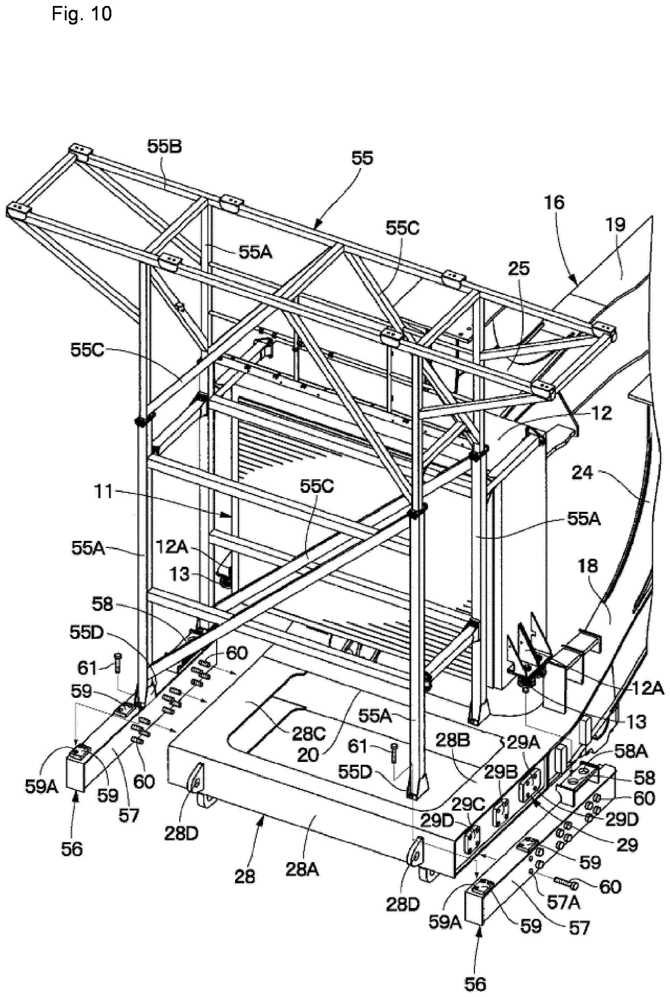

Next, Figures 8 to 10 show the special specification dump truck 51 according to the second embodiment of the present invention. The dump truck 51 travels by supplying power from overhead wires (trolley wires) stretched over mines or the like to the electric motor of the travel device via the current collector (trolley) 52. For this reason, the dump truck 51 has a pantograph support 55 mounted on the front bumper 28 of the vehicle body frame 16 via the device mounting base 56 described later. In the third embodiment, the same reference numerals are used for the same components as in the first embodiment, and their description is omitted.

The trolley specification dump truck 51 is configured similarly to the standard specification dump truck 1, including a self-propelled vehicle body 2 equipped with left and right front wheels 3 and left and right rear wheels 4, and a vessel 5, which is tiltably mounted on the vehicle body 2. The vehicle body 2 of the dump truck 51 is composed of a vehicle body frame 16, which is a common part with the standard specification dump truck 1, and includes a building 7, deck 8, cab 9, etc., mounted on the vehicle body frame 16. However, the dump truck 51 differs from the dump truck 1 of the first embodiment in that a pantograph support 55, which supports the pantograph 53 of the current collector 52, is mounted on the front bumper 28 constituting the vehicle body frame 16.

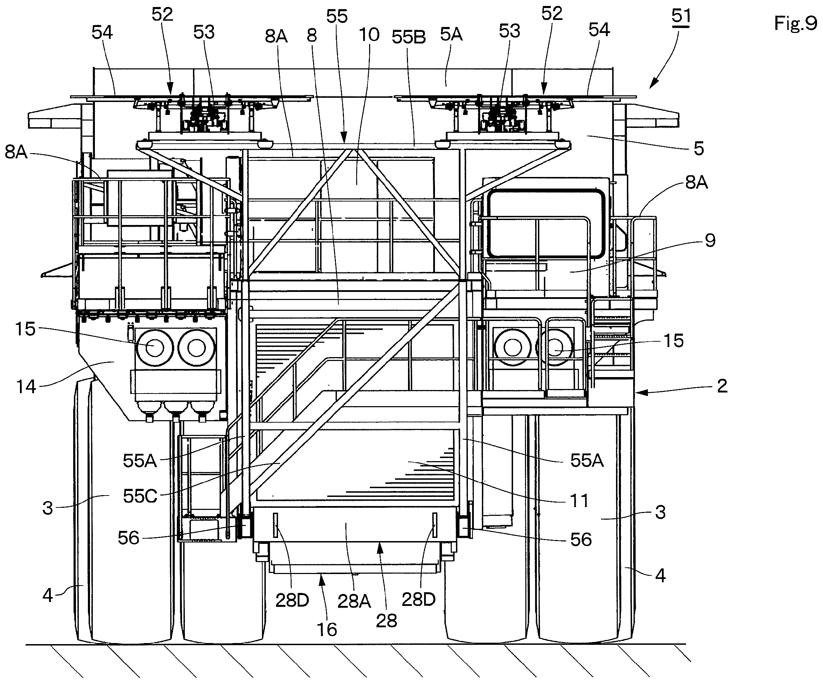

The left and right current collectors 52 are positioned in front of the radiator 11 and are provided at the front end of the dump truck 51. As shown in FIG. 9, the current collector 52 is mounted on both the left and right sides of the pantograph support 55, which is mounted on the front bumper 28 of the vehicle body frame 16. The current collector 52 collects power from overhead wires (not shown) stretched over the path (trajectory) of the dump truck 51 in mines, etc., and supplies it to the electric motor of the travel device. The current collector 52 includes a pantograph 53, which is extendably provided between the pantograph support 55 and the overhead wire, and a current collecting shoe 54, which is provided on the upper end side of the pantograph 53 and collects power by sliding contact with the overhead wire as the pantograph 53 extends.

The pantograph support 55 is another example of device mounted on the front bumper 28. The pantograph support 55 is composed of four columns 55A, a rectangular mounting frame 55B, and multiple reinforcing beams 55C. The four columns 55A are spaced apart in the front, rear, left, and right directions and extend vertically. The rectangular mounting frame 55B is positioned at the upper end of the columns 55A and extends laterally from the columns 55A to the left and right sides. The multiple reinforcing beams 55C connect the four columns 55A. Mounting flanges 55D are provided at the lower ends of the four columns 55A, and these mounting flanges 55D are attached to the column receiving seats 59 of the device mounting base 56. Then, the lower end sides of the pantograph 53 are mounted on both the left and right sides of the mounting frame 55B.

The left and right device mounting bases 56 are mounted on the base fixing sections 29 provided on the left frame section 28B and right frame section 28C of the front bumper 28 to mount the pantograph support 55 on the front bumper 28. The device mounting base 56 includes a rectangular tube-shaped mounting base 57 extending in the front-rear direction, a support frame 58 provided on the upper surface of the mounting base 57, and two column receiving seats 59 positioned in front of the support frame 58 and provided on the upper surface of the mounting base 57.

The mounting base 57 is detachably mounted on the left frame section 28B and right frame section 28C of the front bumper 28. Multiple bolt insertion holes 57A (for example, 12, only two shown) penetrating in the left-right direction are formed in the mounting base 57, and bolts 60 are inserted through these bolt insertion holes 57A. The multiple bolt insertion holes 57A correspond to the four bolt holes 29D of the screw seat 29A, the four bolt holes 29D of the screw seat 29B, and the four bolt holes 29D of the screw seat 29C, which constitute the base fixing section 29 of the front bumper 28. The bolts 60 inserted into the bolt insertion holes 57A of the mounting base 57 are screwed into the bolt holes 29D of the screw seats 29A, 29B, 29C of the base fixing section 29. As a result, the device mounting bases 56 dedicated to the pantograph support 55 are fixed to the left frame section 28B and right frame section 28C of the front bumper 28, respectively.

The support frame 58 is made of a U-shaped frame and is fixed to the upper surface of the rear side of the mounting base 57 using means such as welding. Multiple mount attachment holes 58A penetrating in the vertical direction are formed on the upper surface of the support frame 58. These mount attachment holes 58A correspond to the two mount members 13 provided on the radiator frame 12 (mounting leg 12A) constituting the radiator 11. Therefore, with the device mounting bases 56 fixed to the left frame section 28B and right frame section 28C of the front bumper 28, the mount members 13 of the radiator frame 12 can be attached to the mount attachment holes 58A of the support frame 58.

The column receiving seat 59 is positioned in front of the support frame 58 and is provided on the upper surface of the mounting base 57. Two column receiving seats 59 are provided spaced apart in the front-rear direction, corresponding to the mounting flanges 55D provided at the lower ends of the front and rear columns 55A of the four columns 55A of the pantograph support 55. Multiple bolt holes (female screw holes) 59A penetrating in the vertical direction are formed in the column receiving seat 59. The bolt 61 inserted into the bolt insertion hole formed in the mounting flange 55D of the column 55A is screwed into the bolt hole 59A of the column receiving seat 59. As a result, the pantograph support 55 can be mounted on the front bumper 28 of the vehicle body frame 16 via the device mounting base 56. Thus, the pantograph support 55 is mounted on the front bumper 28 in a stable state, spanning the front bumper 28 in the left-right direction, via the device mounting base 56. Then, by mounting the pantographs 53 on both the left and right sides of the mounting frame 55B of the pantograph support 55, the trolley specification dump truck 51 can be assembled.

The dump truck 51 according to the third embodiment has the configuration as described above. When transporting crushed stone from mines, etc., using the dump truck 1, the pantograph 53 mounted on the pantograph support 55 is extended to make contact with the current collecting shoe 54 on the overhead wire (not shown) stretched over the mine, etc. As a result, power from the overhead wire is supplied to the electric motor of the travel device via the current collector 52. The dump truck 51 travels along the overhead wire between the quarry and the collection site, loading crushed stone onto the vessel 5 at the quarry and discharging the loaded crushed stone at the collection site.

Thus, in the dump truck 51 according to the third embodiment, the device mounting base 56 can be fixed to the base fixing section 29 (screw seats 29A, 29B, 29C) provided on the front bumper 28 using multiple bolts 60. As a result, the pantograph support 55 and the standard specification radiator 11 can be mounted on the front bumper 28 of the vehicle body frame 16 via the dedicated device mounting base 56.

Thus, in the embodiment, the dump truck (1, 41, 51) includes a vehicle body frame 16 to which the front wheels 3 and rear wheels 4 are attached, and a vessel 5 that is tiltably provided relative to the vehicle body frame 16 for loading transported materials. The vehicle body frame 16 is composed of a left frame 18 arranged on the left side in the lateral direction and extending in the front-rear direction, a right frame 19 arranged on the right side in the lateral direction and extending in the front-rear direction, a front frame 20 connecting the front ends of the left frame 18 and right frame 19 and extending in the lateral direction, and a front bumper 28 fixed to the front side of the front frame 20, which is provided with a lifting hook 28D and equipped with devices (radiator 11, radiator 42, pantograph support 55). In the dump truck (1, 41, 51), the front bumper 28 includes a base fixing section 29 to which multiple types of device mounting bases (30, 44, 56) corresponding to the types of devices (radiator 11, radiator 42, pantograph support 55) can be selectively fixed.

According to this configuration, multiple types of device mounting bases (30, 44, 56) corresponding to the devices (radiator 11, radiator 42, pantograph support 55) mounted on the front bumper 28 can be selectively fixed to the base fixing section 29 of the front bumper 28. In this case, the front bumper 28 has a single shape regardless of the type of devices mounted and is fixed to the front side of the front frame 20 of the main frame 17. As a result, the vehicle body frame 16 can be standardized regardless of the type of devices mounted. As a result, the cost of manufacturing dump trucks 1, 41, 51 with different specifications can be reduced, and changes to new specifications of the dump truck can be easily made.

Moreover, a lifting hook 28D is fixed to the front bumper 28, and the front bumper 28 is integrally fixed to the front frame 20 constituting the main frame 17 using welding means. As a result, when performing the task of lifting the dump truck 1 (41, 51) using a rope hooked onto the hook 28D, sufficient strength can be ensured at the joint between the front bumper 28 and the main frame 17 (front frame 20). As a result, compared to forming the front bumper separately from the main frame and attaching the front bumper to the main frame using fasteners, the strength of the vehicle body frame 16 during lifting operations can be enhanced.

In the embodiment, the front bumper 28 is composed of a front frame section 28A extending in the lateral direction while facing the front frame 20 in the front-rear direction and provided with a hook 28D, a left frame section 28B connecting the left end of the front frame section 28A and the front frame 20, and a right frame section 28C connecting the right end of the front frame section 28A and the front frame 20, with the base fixing section 29 provided on the left frame section 28B and right frame section 28C, respectively. According to this configuration, the device (radiator 11, radiator 42, pantograph support 55) is mounted on the front bumper 28 via device mounting bases (30, 44, 56) in a state spanning the front bumper 28 in the lateral direction. As a result, the device (radiator 11, radiator 42, pantograph support 55) can be mounted on the front bumper 28 in a stable condition.

In the embodiment, the left frame section 28B of the front bumper 28 and the left frame 18 are continuous in the longitudinal direction via the front frame 20, and the right frame section 28C of the front bumper 28 and the right frame 19 are continuous in the longitudinal direction via the front frame 20. According to this configuration, the load acting on the front bumper 28 can be smoothly transmitted to the left frame 18 and right frame 19 of the main frame 17. As a result, the load due to the weight of the device (radiator 11, radiator 42, pantograph support 55) is prevented from concentrating on the front bumper 28, and the load can be appropriately distributed between the front bumper 28 and the main frame 17.

In the embodiment, an example is illustrated where the base fixing section 29 provided on the front bumper 28 is configured with three screw seats 29A, 29B, 29C. However, the present invention is not limited to this, and the base fixing section 29 may be configured with one, two, or four or more screw seats, for example.

### DESCRIPTION OF REFERENCE NUMERALS

1,41,51: Dump truck
2: Vehicle body
3: front wheel
4: rear wheel
5: vessel
11,42: Radiator (device)
18: Left frame
19: Right frame
20: Front frame
28: Front bumper
28A: Front frame section
28B: Left frame section
28C: Right frame section
29: Base fixing section
30,44,56: device mounting base
55: pantograph support

## Claims

1. A dump truck comprising:
a vehicle body frame to which wheels are attached; and a vessel that is tiltably provided with respect to the vehicle body frame for loading to-be-transported materials, and
the vehicle body frame including:
a left frame disposed on the left side in the lateral direction and extending in the longitudinal direction;
a right frame disposed on the right side in the lateral direction and extending in the longitudinal direction;
a front frame connecting the front end of the left frame and the front end of the right frame and extending in the lateral direction; and
a front bumper fixed to the front side of the front frame, provided with a hook for lifting and mounted with various devices, wherein
the front bumper includes a base fixing section where multiple types of device mounting bases, corresponding to the types of devices, are selectively fixed.

2. The dump truck according to claim 1,
the front bumper includes a front frame section extending in the lateral direction while facing the front frame in the longitudinal direction and provided with the hook, a left frame section connecting the left end of the front frame section and the front frame, and a right frame section connecting the right end of the front frame section and the front frame, and
the base fixing section is provided on the left frame section and the right frame section, respectively.

3. The dump truck according to claim 2,
the left frame sections of the front bumper and the left frame are continuous in the longitudinal direction via the front frame, and
the right frame sections of the front bumper and the right frame are continuous in the longitudinal direction via the front frame.
